(19) Europäisches Patentamt
European Patent Office
Office européen des brevets

(11) **EP 4 542 488 A1**

(12) **EUROPEAN PATENT APPLICATION**
published in accordance with Art. 153(4) EPC

(43) Date of publication:
**23.04.2025 Bulletin 2025/17**

(51) International Patent Classification (IPC):
***G06T 7/292*** (2017.01)

(21) Application number: **22946629.7**

(22) Date of filing: **16.12.2022**

(86) International application number:
**PCT/CN2022/139450**

(87) International publication number:
**WO 2023/240963 (21.12.2023 Gazette 2023/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.06.2022 CN 202210676732**

(71) Applicant: **Zhejiang Uniview Technologies Co., Ltd.**
**Hangzhou, Zhejiang 310051 (CN)**

(72) Inventors:
• **ZHOU, Di**
**Hangzhou, Zhejiang 310051 (CN)**

• **CHEN, Shujie**
**Hangzhou, Zhejiang 310051 (CN)**
• **WANG, Xun**
**Hangzhou, Zhejiang 310051 (CN)**
• **ZHANG, Pengguo**
**Hangzhou, Zhejiang 310051 (CN)**
• **XU, Aihua**
**Hangzhou, Zhejiang 310051 (CN)**
• **WANG, Weijie**
**Hangzhou, Zhejiang 310051 (CN)**

(74) Representative: **Plougmann Vingtoft a/s**
**Strandvejen 70**
**2900 Hellerup (DK)**

(54) **MULTISPECTRAL MULTI-SENSOR SYNERGISTIC PROCESSING METHOD AND APPARATUS, AND STORAGE MEDIUM**

(57)      A multispectral multi-sensor synergistic processing method, a multispectral multi-sensor synergistic processing apparatus, and a storage medium are provided. The multispectral multi-sensor synergistic processing method includes: acquiring images of multiple channels, where an image of each channel is a monochrome image, and colors of the images of different channels are different; performing detection, identification and tracking of a target according to the monochrome images, generating a tracking box for the target and storing information of the tracking box; and registering and fusing the images of the multiple channels to generate a fused image, and overlaying stored information of the tracking box onto the fused image.

FIG. 2

EP 4 542 488 A1

## Description

This application claims priority to Chinese patent application No. 202210676732.7 filed with the China National Intellectual Property Administration (CNIPA) on June 16, 2022, the disclosure of which is incorporated herein by reference in its entirety.

## TECHNICAL FIELD

This application relates to image processing technology, for example, a multispectral multi-sensor synergistic processing method, a multispectral multi-sensor synergistic processing apparatus and a storage medium.

## BACKGROUND

A camera with a single image sensor adopts Bayer format imaging. Each pixel in the image can only collect information of one of the three colors of RGB in the sensor, and information of the other two colors comes from the surrounding pixels, resulting in color distortion of the image acquisition. In a technical solution, three image sensors can be used to collect RGB colors respectively, and then registration and fusion are performed to generate a visible light color image. However, registration and fusion take time, which increases the imaging delay, and are prone to cause target lose when fast-moving targets such as vehicles are tracked.

## SUMMARY

A multispectral multi-sensor synergistic processing method, a multispectral multi-sensor synergistic processing apparatus and a storage medium are provided according to embodiments of the present application, which can achieve target tracking.

A multispectral multi-sensor synergistic processing method is provided according to embodiments of the present application, which includes:

acquiring images of multiple channels, where an image of each channel is a monochrome image, and colors of images of different channels are different;

performing detection, identification and tracking of a target according to monochrome images, generating a tracking box for the target and storing information of the tracking box; and

registering and fusing the images of the multiple channels to generate a fused image, and overlaying stored information of the tracking box onto the fused image.

A multispectral multi-sensor synergistic processing apparatus is provided according to embodiments of the present application, which includes a memory and a processor, the memory storing a program. The program, when being read and executed by the processor, implements the multispectral multi-sensor synergistic processing method according to any of the embodiments described above.

A computer-readable storage medium is provided according to embodiments of the present application, the computer-readable storage medium storing one or more programs. The one or more programs can be executed by one or more processors to implement the multispectral multi-sensor synergistic processing method according to any of the embodiments described above.

## BRIEF DESCRIPTION OF DRAWINGS

FIG. 1 is a schematic diagram of a camera optical subsystem according to an exemplary embodiment;

FIG. 2 is a flow chart of a multispectral multi-sensor synergistic processing method according to an embodiment of the present disclosure;

FIG. 3 is a schematic diagram showing the inconsistency of local brightnesses of multispectral images according to an exemplary embodiment; and

FIG. 4 is a block diagram of a multispectral multi-sensor synergistic processing apparatus according to an exemplary embodiment.

DETAILED DESCRIPTION

The present application includes and contemplates combinations of features and elements known to the person of ordinary skill in the art. The embodiments, features and elements disclosed in the present application may also be combined with any conventional features or elements to form a unique technical solution as defined by the claims. Any features or elements of any embodiment may also be combined with features or elements of other technical solutions to form another unique technical solution as defined by the claims. Therefore, it should be understood that any feature shown and/or discussed in the present application may be implemented alone or in any appropriate combination. Therefore, the embodiments are not limited except for being limited by the appended claims and their equivalents. Furthermore, various modifications and changes may be made within the scope of the appended claims.

Furthermore, when describing representative embodiments, the specification may have presented the method and/or process as a particular order of steps. However, to the extent that the method or process does not rely on the particular order of steps described herein, the method or process should not be limited to the steps in the particular order described. As will be understood by the person of ordinary skill in the art, other orders of steps are possible. Therefore, the particular order of steps set forth in the specification should not be interpreted as a limitation on the claims. Furthermore, the claims for the method and/or process should not be limited to executing their steps in the order as written. The person skilled in the art can easily understand that these orders can be changed and the changed orders still remain within the spirit and scope of the embodiments of the present application.

Two problems exist currently in collecting three images of RGB respectively by using three image sensors and then performing registration and fusion. First, it takes time for registration and fusion, which increases the imaging delay, so it is prone to losing the target when a fast-moving target such as a vehicle is tracked; second, the registration itself uses scale-invariant feature transform (SIFT) or speeded up robust features (SURF) technology, which has weak robustness. Unreliable registration is prone to causing blurring of the final fused image.

In the embodiments of the present disclosure, multiple image sensors are used to collect images and target tracking is performed based on monochrome images, which can avoid losing the target.

Traditional cameras use the Bayer format for image acquisition. For each pixel, only one of the three RGB components is collected, and the other two components are interpolated and estimated based on the information of nearby pixels. Therefore, the obtained image is not true. In order to achieve a true color reproduction effect, in the implementation of the present disclosure, an optical subsystem is used in which three colors RGB are separated, and the light is separated into the three primary colors of RGB by a beam splitter prism, and then the three colors are collected by three sensors respectively, and are imaged separately, and finally the images of the three colors are synthesized into a true color image.

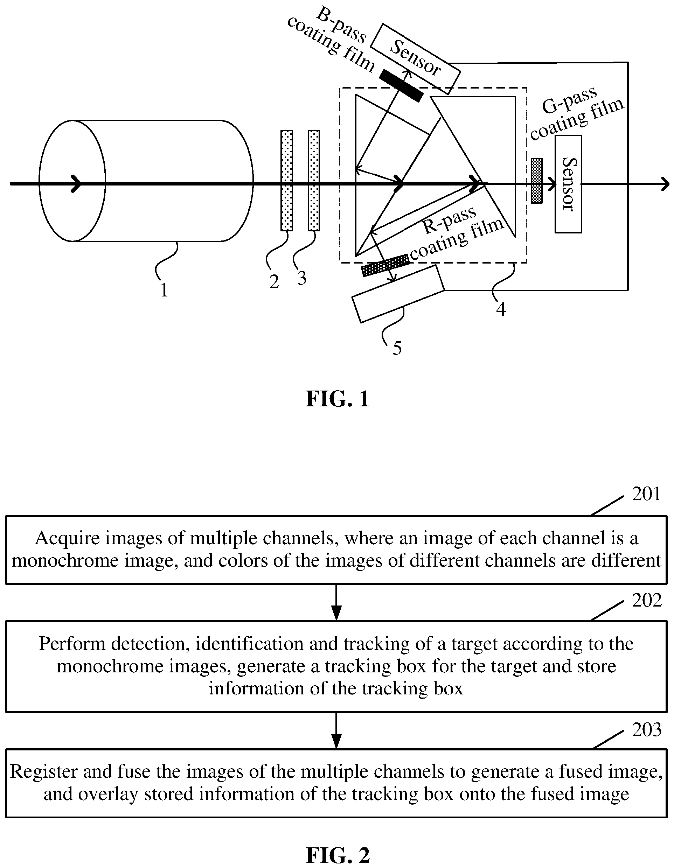

FIG. 1 is a schematic diagram of an optical subsystem of a camera according to an exemplary embodiment. As shown in FIG. 1, the optical subsystem of the camera according to this embodiment includes: a lens 1, an infrared (IR) filter 2, a neutral density (ND) filter 3, a beam splitter prism 4 and multiple sensors 5. Each sensor 5 collects light of one color component. The IR filter 2 includes an infrared filter that can filter infrared light. When the light intensity is high (for example, in a daytime environment), the infrared filter works to filter the infrared light; when the light intensity is low (for example, in a nighttime environment), the infrared filter does not work, and the infrared light can be transmitted, thereby generating a near-infrared image. The ND filter 3 is configured to attenuate the incident light and reduce the exposure. The camera can control whether to use the ND filter 3 or not. The beam splitter prism 4 may include three prisms, and each prism emits light of one color. For example, the light-emitting surfaces of the three prisms are respectively coated with an R-pass coating film, a G-pass coating film and a B-pass coating film, which can realize bandpass filtering, and obtain red light (R-pass coating film), green light (G-pass coating film) and blue light (B-pass coating film), respectively. The light emitted from the three light-emitting surfaces enters three sensors respectively. The coating film can filter out some clutter to obtain a better waveform for each channel, filter out clutter signals and abnormal signals at special angles, and make the color reproduction more realistic. However, the embodiments of the present disclosure are not limited to this, and the coating film may not be used.

In an exemplary embodiment, the ultra-high-definition camera can support three 2/3-inch 4K complementary metal-oxide-semiconductor (CMOS) sensors to realize RGB three-way splitting. This is only an example, and it can be sensors of other sizes and pixel numbers.

In an exemplary embodiment, the camera may further include a near-infrared light filling device. When the light intensity is less than a preset light intensity threshold, the near-infrared light filling device may be turned on to achieve near-infrared image acquisition. When the light intensity is greater than or equal to the preset light intensity threshold, the near-infrared light filler device may be turned off.

The camera system described above is only an example, and the embodiments of the present disclosure are not limited thereto. It may be other camera systems that can achieve multi-channel image acquisition. For example, the camera system may include other filter components, etc.

FIG. 2 is a flow chart of a multispectral multi-sensor synergistic processing method according to an embodiment of the present disclosure. As shown in FIG. 2, the multispectral multi-sensor synergistic processing method according to the embodiment of the present disclosure includes: steps 201 to 203.

Step 201 may include acquiring images of multiple channels, where an image of each channel is a monochrome image, and colors of the images of different channels are different.

Step 202 may include performing detection, identification and tracking of a target according to the monochrome images, generating a tracking box for the target and storing information of the tracking box.

Step 203 may include registering and fusing the images of the multiple channels to generate a fused image, and overlaying stored information of the tracking box onto the fused image.

The solution according to this embodiment can reduce color distortion by acquiring multi-channel images, and can achieve fast tracking by performing target tracking through monochrome images, thereby avoiding tracking failure caused by registration and fusion delay.

In an exemplary embodiment, the target includes but is not limited to a vehicle, and can also be a pedestrian, an animal, an object being transferred on an assembly line, etc. The category of the target should not be a limitation to the present application.

In an exemplary embodiment, the multiple channels may include a first channel, a second channel and a third channel. The image of the first channel may be a red image, the image of the second channel may be a green image, and the image of the third channel may be a blue image.

In another exemplary embodiment, the image of the first channel may be a green image, the image of the second channel may be a blue image, and the image of the third channel may be a red image, but this is not limiting.

In an exemplary embodiment, the overlaying stored information of the tracking box onto the fused image includes:

overlaying the stored latest tracking box information onto the fused image. The solution according to this embodiment can achieve real-time tracking of the target and display it in the fused image. However, the disclosed embodiment is not limited to this. The tracking box displayed in the fused image may be the tracking box at the time corresponding to the fused image. Since the time delay caused by the monochrome images is small and the fusion and registration will cause a certain time delay, the time corresponding to the latest tracking box obtained from the monochrome images is generally later than the time corresponding to the fused image.

In an exemplary embodiment, the detection, identification and tracking of a target can be implemented based on the monochrome images. If a target that meets the requirements is found, the target is enlarged and tracked, and a tracking box is generated and overlayed on the target. The target is at least partially located in the tracking box. For example, the target can be completely located in the tracking box.

In an exemplary embodiment, the information of the tracking box may include the coordinate information of an upper left corner and a lower right corner of the tracking box, but is not limited thereto. The information of the tracking box may be the coordinate information of the upper left corner of the tracking box, the length and width of the tracking box, or may be the coordinates of the center point of the tracking box, the length and width of the tracking box, etc. The tracking box may be a rectangle or other shapes. Since the delay caused by monochrome image acquisition is very small, real-time tracking of the target can be achieved based on the monochrome images. As the target moves, the position and size of the generated tracking box are updated along with the target. The coordinate information of the upper left corner and the lower right corner of the tracking box is stored in real time in the memory. If the position and size of the tracking box change, the stored tracking box information is also changed synchronously. It may store only the latest tracking box information, or it may store the information of the tracking box within a period of time.

After each frame of image is fused, the latest stored coordinate information of the tracking box can be extracted and the tracking box can be overlayed on the fused color image, thereby presenting the target tracking effect in the color video image to the user, that is, the tracking box follows the moving target in real time.

The person skilled in the art know or should know that in the image fusion process described above, the images corresponding to the three channels may be fused, or the images corresponding to any two channels may be fused to meet different requirements.

The coordinate information of the tracking box generated by tracking the target with the monochrome images may not be synchronized with the overlaying of the tracking box of the fused image. That is, the generation of the coordinate information of the tracking box in step 202 and the overlaying of the target tracking box of the fused image in step 203 are independent, and there is no sequential relationship between the two. The coordinate information of the tracking box is extracted from the memory as needed according to the generation frequency of the fused image, and the corresponding tracking box is generated in the fused image.

In an exemplary embodiment, the channel includes a red channel; the performing detection, identification and tracking of a target according to the monochrome images includes:

when current ambient light intensity is less than a preset light intensity threshold, selecting a near-infrared image of the red channel for detection, identification and tracking of the target. When the current ambient light intensity is less than the preset light intensity threshold, the near-infrared light filling device of the camera is turned on. The near-infrared light will generate a near-infrared image through the red channel, thereby generating a clear near-infrared image. The solution according to this embodiment can realize target tracking when the ambient light intensity is less than a preset light intensity threshold.

In an exemplary embodiment, the ambient light intensity can be determined by means of a light intensity sensor.

In an exemplary embodiment, whether the current ambient light intensity is less than the preset light intensity threshold can be determined by whether the near-infrared light filling device (near-infrared light filler) in the camera is turned on. That is, when the near-infrared light filling device is turned on, it is judged that the ambient light intensity is less than the preset light intensity threshold; and when the near-infrared light filling device is turned off, it is judged that the ambient light intensity is greater than the preset light intensity threshold.

In an exemplary embodiment, one or more monochrome images can be selected according to the hue of the scene, for target detection, identification and tracking. The performing detection, identification and tracking of a target according to the monochrome images includes:

in a case where current ambient light intensity is greater than or equal to a preset light intensity threshold, acquiring the sum of pixel values of an image of each channel, and when there is a case in which the sum of pixel values of an image of a first channel is greater than the sum of pixel values of image of each other channel and the difference between the sum of the pixel values of the image of the first channel and the sum of the pixel values of the image of at least one other channel is greater than a preset value, selecting the monochrome image of one or more channels other than the first channel for target detection, identification and tracking. The sum of the pixel values of the image of a channel is the sum of all the pixel values of the image of the channel.

Three channels (first channel, second channel and third channel) are taken as an example, that is, there is a case in which the sum of pixel values of an image of the first channel is greater than the sum of pixel values of an image of the second channel, and the sum of the pixel values of the image of the first channel is greater than the sum of pixel values of an image of the third channel, and at least one of the difference between the sum of the pixel values of the image of the first channel and the sum of the pixel values of the image of the second channel and the difference between the sum of the pixel values of the image of the first channel and the sum of the pixel values of the image of the third channel is greater than the preset value, the monochrome image of at least one of the second channel and the third channel is selected for target detection, identification and tracking.

In the solution according to this embodiment, the sum of the pixel values of the image of the first channel is greater than the sum of the pixel values of the image of each other channel, and the difference is greater than the preset value (for example, it can be a first preset value or a second preset value described below), indicating that the color of the image of the first channel is the overall hue of the image, and an image with a color different from the overall hue is selected for target tracking, which highlights the foreground target and avoids the difficulty in distinguishing the target from the background due to both colors of which are the overall hue.

The above is illustrated below through the examples.

In an exemplary embodiment, if the overall hue is red (e.g., an autumn full of maple leaves), a green component image (i.e., an image of a green channel) or a blue component image (i.e., an image of a blue channel) may be randomly selected for target tracking, instead of a red component image (i.e., an image of a red channel). In this way, the green or blue component of the background is weakened, highlighting the foreground target (the background is mainly red), thereby avoiding difficulty in distinguishing since both the target and the background are red.

If the overall hue is green (e.g., a mountain view), a red or blue component image may be randomly selected for target tracking, instead of a green component image, thereby avoiding difficulty in distinguishing since both the target and the background are green.

If the overall hue is blue (e.g., a sky or a sea view), a red or green component image may be randomly selected for target tracking, instead of a blue component image, thereby avoiding difficulty in distinguishing since both the target and the background are blue.

In the above embodiment, only a single-channel monochrome image is used for target tracking. In another embodiment, multiple-channel monochrome images may be used for target tracking. For example, if the overall hue is red (e.g., an autumn full of maple leaves), the green component image and the blue component image are used for target tracking respectively to avoid unclear distinction between the target and the background in one of the channel images. The solution according to this embodiment can increase reliability and avoid interference caused by the similarity of the colors of the foreground target and the background scene.

In an exemplary embodiment, when the current ambient light intensity is greater than or equal to a preset light intensity threshold, the sum of the pixel values of the image of each channel can be obtained. When there is a case in which the sum of the pixel values of the image of the first channel is greater than the sum of the pixel values of the image of each other channel, then:

when the difference between the sum of the pixel values of the image of the first channel and the sum of the pixel values of the image of each other channel is greater than a first preset value, a monochrome image of a channel other than the first channel is selected for target detection, identification and tracking; and

when the difference between the sum of the pixel values of the image of the first channel and the sum of the pixel values of the image of at least one other channel is less than or equal to a first preset value and greater than a second preset value, the monochrome images of all other channels other than the first channel are selected for target detection, identification and tracking; and the first preset value is greater than the second preset value. That is, in this embodiment, when the difference between the sum of pixel values of the image of the first channel and the sum of pixel values of the image of each other channel is large, one monochrome image is used for target tracking, and when the difference is small, multiple monochrome images are used for target tracking.

In an exemplary embodiment, the performing detection, identification and tracking of a target according to the monochrome images includes:
when the current ambient light intensity is greater than or equal to a preset light intensity threshold, acquiring the sum of pixel values of an image of each channel, and for any first channel and second channel, when the difference between the sum of pixel values of an image of the first channel and the sum of pixel values of an image of the second channel is less than a preset value, selecting the monochrome images of all channels for target detection, identification and tracking. Three color channels are taken as an example, when the difference between the sum of pixel values of the image of the red channel and the sum of pixel values of the image of the green channel is less than a preset value (for example, it can be the second preset value), the difference between the sum of pixel values of the image of the red channel and the sum of pixel values of the image of the blue channel is less than a preset value (for example, it can be the second preset value), and the difference between the sum of pixel values of the image of the blue channel and the sum of pixel values of the image of the green channel is less than a preset value (for example, it can be the second preset value), the monochrome image of the red channel, the monochrome image of the green channel, and the monochrome image of the blue channel are selected for target detection, identification and tracking. The solution according to this embodiment uses the monochrome images of all channels for target tracking when the colors of the scene are relatively even.

In an exemplary embodiment, when monochrome images of multiple channels are selected for target detection, identification and tracking, a combined set of targets detected in the monochrome images of the multiple channels is used as targets of the fused image.

Thus, the overlaying stored information of the tracking box onto the fused image includes:
overlaying stored information of the tracking boxes of targets detected in the monochrome images of the multiple channels on the fused image.

For example, when target tracking is performed with the monochrome images of two channels, the combined set of target sets detected in the images of the two channels can be taken as the total target set, and the tracking boxes of all targets in the total target set can be overlayed in the fused image. When target tracking is performed with the monochrome images of three channels, the combined set of target sets detected in the images of the three channels can be taken as the total target set, and the tracking boxes of all targets in the total target set can be overlayed in the fused image.

The image registration task aims to find the coordinate correspondence between images by maximizing the similarity measure (or minimizing the distance measure) between the two images. Currently mature feature-based image registration techniques all assume to some extent that the local brightnesses of the images have consistent response characteristics to facilitate the detection and matching of local features. In multispectral images, there is no consistency in the local brightnesses of images in different channels, so it can hardly accurately register them using feature-based image registration techniques.

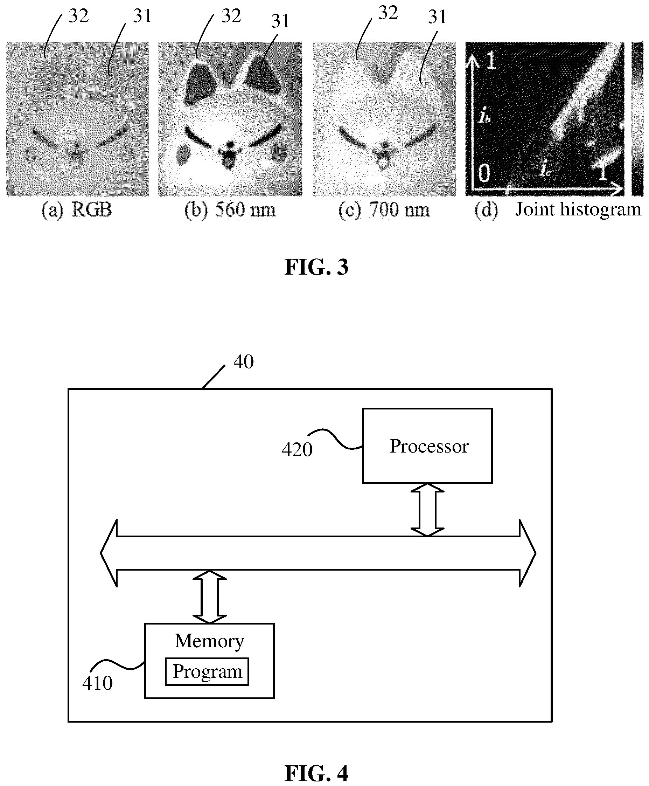

The inherent differences in local brightnesses of images in different bands pose great challenges to multispectral image registration. FIG. 3 is a schematic diagram showing the inconsistency of local brightnesses of multispectral images. In FIG. 3, (a) to (c) show the characteristics of drastic changes in local brightness and contrast of different bands in a multispectral image. In FIG. 3, (a) is a multispectral image represented by RGB; (b) is a 560 nm band image; (c) is a 700 nm band image; (d) shows the joint histogram distribution of the brightness of 560 nm and 700 nm images. In FIG. 3 (d), for any point (ic, ib), it represents the number of related points of grayscale ic appearing in the 700 nm band image and the number of related points of grayscale ib appearing in the 560 nm band image. The lighter the color, the larger the corresponding number of points. There is no obvious functional mapping relationship in the joint histogram, that is, there is no consistency in the local brightnesses of the same channel image. Since the spectral responses of an area 32 and an area 31 of the ceramic cat's face are significantly different in the 560 nanometer (nm) band image and similar in the 700 nm band image, the area 31 is clearly visible in the 560 nm band channel image, but difficult to identify in the 700 nm band channel image. The contrast between the area 31 and the area 32 is obvious in the 560 nm image, but almost invisible in the 700 nm image. Therefore, it can hardly accurately register them using feature-based image registration technology.

In the disclosed embodiment, registration can be performed based on gradients of a difference image.

The difference image is the difference between a reference channel image and a transformed image obtained after the channel image to be registered is subjected to coordinate transformation. As a direct result of the sparsest gradients, the sum of the absolute values of the gradients of the difference image obtained based on registered image will be smaller than the sum of the absolute values of the gradients of the difference image obtained based on unregistered image. Let $f_r(x)$ represent the reference channel image, $x = (x, y)^T$ be the two-dimensional space coordinate, $f(x)$ and $\tilde{f}(x)$ represent a registered channel image and an unregistered channel image respectively, then the above result can be expressed as:

$$\sum_{x\in\Omega 1} |\nabla_l(f(\mathbf{x}) - f_r(\mathbf{x}))| \leq \sum_{x\in\Omega 2} \left|\nabla_l(\tilde{f}(\mathbf{x}) - f_r(\mathbf{x}))\right|$$

where the operator $\nabla_l$ represents a derivative operator of image in a direction $l \in \{x, y\}$. Intervals $\Omega 1$ and $\Omega 2$ represent effective calculation areas, $\Omega 1$ is an overlapping area of images $f(x)$ and $f_r(x)$, and $\Omega 2$ is an overlapping area of images $\tilde{f}(X)$ and $f_r(x)$. If $f_r$, $f$ and $\tilde{f}$ are used to represent images $f_r(x)$, $f(x)$ and $\tilde{f}(x)$ after being vectorized respectively, and it is recorded

$$\|\nabla_l(\mathbf{f} - \mathbf{f}_r)\|_1 = \sum_{\mathbf{x}\in\Omega} |\nabla_l(f(\mathbf{x}) - f_r(\mathbf{x}))|,$$

then the above formula can be expressed by the $\ell_1$ norm as

$$\|\nabla_l(\mathbf{f} - \mathbf{f}_r)\|_1 \leq \|\nabla_l(\tilde{\mathbf{f}} - \mathbf{f}_r)\|_1,$$

all absolute values of the gradients in the direction l are summed on two sides of the inequality separately, and it can obtain

$$\sum_l \|\nabla_l(\mathbf{f} - \mathbf{f}_r)\|_1 \leq \sum_l \|\nabla_l(\tilde{\mathbf{f}} - \mathbf{f}_r)\|_1$$

In the above formula, the $\ell_1$ norm naturally plays the role of measuring the sparsity of the difference image gradients. The sum of the absolute values of gradients of the image in multiple directions (directions $x$, $y$ in this solution) is referred to as the anisotropic total variation. Since this solution is derived from the gradient distribution, $\Sigma_l\|\nabla_l(f(x) - f_r(x))\|_1$ can be referred to as the total gradient of the image. The above formula shows that the total gradient of the difference image of the registered multispectral image is always smaller than the total gradient of the difference image of the unregistered multispectral image, so the multispectral image registration can be characterized by minimizing the total gradient of the difference image. Therefore, the $f'(x)$ that minimizes $\Sigma_l\|\nabla_l(f'(x) - f_r(x))\|_1$ can be calculated as the registered image. In an exemplary embodiment, the registering and fusing the images of the multiple channels includes:
for the images of the multiple channels, selecting an image of one channel as a reference image, and registering the images of the remaining channels, as the images to be registered, with the reference image by:

selecting $f'(x)$ with which $\Sigma_l\|\nabla_l(f'(x) - f_r(x))\|_1$ is minimum and an overlapping area of $f'(x)$ and $f_r(x)$ is non-zero as a registered image, where $\|\nabla_l(f'(x) - f_r(x))\|_1 = \Sigma_{x\in\Omega}|\nabla_l(f'(x) - f_r(x))|$; $f'(x)$ is an image obtained after the image to be registered is subjected to coordinate transformation, $f_r(x)$ is the reference image, $\Omega$ is the overlapping area of $f'(x)$ and $f_r(x)$, and $x = (x, y)^T$ is a coordinate of two-dimensional space; and

fusing the registered image with the reference image.

Specifically, the coordinate transformation of the image to be registered may include rotation, affine, scaling, translation and other transformations.
The registration method according to this embodiment enhances robustness and improves the registration effect compared with the feature-based registration solution.
In the process of calculating the total gradient of the difference image, the spatial summation is performed in the overlapping area of the images, so it is sensitive to changes in the overlapping area. The measure value $\Sigma_l\|\nabla_l(f(x) - f_r(x))\|_1$ will become smaller as the overlapping area becomes smaller. When the two images have no overlapping area, the measure value is reduced to zero. This means that when the total gradient of the difference image is directly minimized, its solution set contains the wrong registration results of zero overlapping area. In order to avoid falling into the wrong solution set, the total gradient of the difference image can be normalized. In order to avoid zero overlapping area, the minimized measure value is required to not only achieve image content registration, but also enable as much image information as possible to be provided in the overlapping area, that is, the image energy in the overlapping area should be large. Therefore, the normalized total gradient (NTG) of the difference image can be defined as follows:

$$NTG(f, f_r) = \frac{\sum_l \|\nabla_l(f'(x) - f_r(x))\|_1}{\sum_l (\|\nabla_l f'(x)\|_1 + \|\nabla_l f_r(x)\|_1)}$$

In the right-hand side of the above expression, the numerator is the total gradient of the difference image, and the denominator is the total image energy that the overlapping area can provide. Minimizing the value of NTG is required to enable the overlapping area to be as large as possible while achieving the image registration, which effectively avoids the registration result from falling into the error of zero overlapping area.

By taking NTG as a measure, the registration problem of multispectral images can be converted into an NTG minimization problem. The registration of multispectral images can be achieved by the solving method of a standard minimization problem. That is, in an exemplary embodiment, the registering and fusing the images of the multiple channels includes:

for the images of the multiple channels, selecting an image of one channel as a reference image, and registering the images of the remaining channels, as the images to be registered, with the reference image by:

selecting f'(x) with which $\frac{\sum_l \|\nabla_l(f'(x) - f_r(x))\|_1}{\sum_l (\|\nabla_l f'(x)\|_1 + \|\nabla_l f_r(x)\|_1)}$ is minimum as a registered image, where $\|\nabla_l(f'(x) - f_r(x))\|_1 = \Sigma_{x \in \Omega} |\nabla_l(f'(x) - f_r(x))|$, $\|\nabla_l f'(x)\|_1 = \Sigma_{x \in \Omega} \nabla_l f'(x)$, $\|\nabla_l f_r(x)\|_1 = \Sigma_{x \in \Omega} \nabla_l f_r(x)$; f'(x) is an image obtained after the image to be registered is subjected to coordinate transformation, $f_r(x)$ is the reference image, and $\Omega$ is the overlapping area of f'(x) and $f_r(x)$; and

fusing the registered image with the reference image.

As shown in FIG. 4, a multispectral multi-sensor synergistic processing apparatus 40 is provided according to embodiments of the present disclosure, which includes a memory 410 and a processor 420, where the memory 410 stores a program. The program, when being read and executed by the processor 420, implements the multispectral multi-sensor synergistic processing method according to any of the above embodiments.

In an exemplary embodiment, referring to FIG. 1, the multispectral multi-sensor synergistic processing apparatus may further include: a lens 1, a beam splitter prism 4 and multiple sensors 5.

The lens 1 is configured to receive external light and transmit the external light to the beam splitter prism 4.

The beam splitter prism 4 is configured to split the incident light to obtain multiple monochromatic lights, and the multiple monochromatic lights are incident on the multiple sensors 5 respectively, where each monochromatic light is incident on one sensor 5.

The sensor 5 is configured to convert the incident light into an electrical signal and output the electrical signal to the processor 420. The processor 420 generates an image of one channel according to the signal of each sensor 5, and generates images of multiple channels according to the signals of the multiple sensors 5.

In an exemplary embodiment, as shown in FIG. 1, the multispectral multi-sensor synergistic processing apparatus 40 may further include: at least one of an IR filter 2 and an ND filter 3 arranged between the lens 1 and the beam splitter prism 4.

A computer-readable storage medium is further provided according to the disclosed embodiment, where the computer-readable storage medium stores one or more programs, and the one or more programs can be executed by one or more processors to implement the multispectral multi-sensor synergistic processing method according to any of the above embodiments. The computer-readable storage medium may be a non-transitory computer-readable storage medium.

A person skilled in the art may understand that all or some of the steps in the above disclosed method, and functional modules/units in the above disclosed system and apparatus may be implemented as software, firmware, hardware and appropriate combinations thereof. In hardware implementation, the division between the functional modules/units mentioned in the above description does not necessarily correspond to the division of physical components; for example, a physical component may have multiple functions, or a function or step may be performed by several physical components in cooperation. Some or all components may be implemented as software executed by a processor, such as a digital signal processor or a microprocessor, or implemented as hardware, or implemented as an integrated circuit, such as an application-specific integrated circuit. Such software may be distributed on computer-readable media, which may include computer storage media (or non-transitory media) and communication media (or transient media). As is known to the person of ordinary skill in the art, the term computer storage media includes volatile and non-volatile, removable and non-removable media implemented in any method or technology for storing information such as computer-readable instructions, data structures, program modules, or other data. Computer storage media include, but are not limited to, RAM, ROM, EEPROM, flash memory or other memory technology, CD-ROM, digital versatile disks (DVD) or other optical disk storage, magnetic cassettes, magnetic tapes, magnetic disk storage or other magnetic storage apparatuses, or any other medium that can be used to store the desired information and can be accessed by a computer. Furthermore, as is known to the person of ordinary skill in the art, communication media typically contain computer-readable instructions, data structures, program modules, or other data in a modulated data signal such as a carrier wave or other transport mechanism, and may include any information delivery media.

**Claims**

1.  A multispectral multi-sensor synergistic processing method, comprising:

    acquiring images of a plurality of channels, wherein an image of each channel is a monochrome image, and colors of images of different channels are different;
    performing detection, identification and tracking of a target according to monochrome images, generating a tracking box for the target and storing information of the tracking box; and
    registering and fusing the images of the plurality of channels to generate a fused image, and overlaying stored information of the tracking box onto the fused image.

2.  The method according to claim 1, wherein the overlaying stored information of the tracking box onto the fused image comprises:
    overlaying stored latest information of the tracking box onto the fused image.

3.  The method according to claim 1, wherein the channel comprises a red channel; the performing detection, identification and tracking of a target according to monochrome images comprises:
    in response to determining that current ambient light intensity is less than a preset light intensity threshold, selecting a near-infrared image of the red channel for detection, identification and tracking of the target.

4.  The method according to claim 1, wherein the plurality of channels comprise a first channel, and the performing detection, identification and tracking of a target according to monochrome images comprises:
    in response to determining that current ambient light intensity is greater than or equal to a preset light intensity threshold, acquiring a sum of pixel values of an image of each channel, and in response to determining that a sum of the pixel values of the image of the first channel is greater than the sum of the pixel values of the image of each channel other than the first channel in the plurality of channels, and a difference between the sum of the pixel values of the image of the first channel and a sum of the pixel values of the image of at least one channel other than the first channel in the plurality of channels is greater than a preset value, selecting the monochrome image of at least one channel other than the first channel to perform detection, identification and tracking of the target.

5.  The method according to claim 1, wherein the plurality of channels comprise a first channel and a second channel, and the performing detection, identification and tracking of a target according to monochrome images comprises:
    in response to determining that current ambient light intensity is greater than or equal to a preset light intensity threshold, acquiring a sum of pixel values of an image of each channel, and in response to determining that a difference between a sum of the pixel values of the image of the first channel and a sum of the pixel values of the image of the second channel is less than a preset value, selecting monochrome images of all channels to perform detection, identification and tracking of the target.

6.  The method according to claim 4 or 5, further comprising: in response to determining to select monochrome images of a plurality of channels to perform detection, identification and tracking of the target, taking a combined set of targets detected in the monochrome images of the plurality of channels as targets of the fused image, wherein
    the overlaying stored information of the tracking box onto the fused image comprises:
    overlaying stored information of tracking boxes of targets detected in the monochrome images of the plurality of channels onto the fused image.

7. The method according to any one of claims 1 to 5, wherein the registering and fusing the images of the plurality of channels comprises:

selecting from the images of the plurality of channels an image of one channel as a reference image, and registering images other than the reference image as images to be registered with the reference image by:

selecting $f'(x)$ making $\Sigma_l\|\nabla_l(f'(x) - f_r(x))\|_1$ minimum and an overlapping area of $f'(x)$ and $f_r(x)$ non-zero as a registered image, wherein $\nabla_l$ represents a derivative operator in a direction $l \in \{x, y\}$, $\|\nabla_l(f'(x) - f_r(x))\|_1 = \Sigma_{x\in\Omega}|\nabla_l(f'(x) - f_r(x))|$; $f'(x)$ is an image obtained after an image to be registered is subjected to coordinate transformation, $f_r(x)$ is the reference image, $\Omega$ is the overlapping area of $f'(x)$ and $f_r(x)$, $x = (x, y)^T$ is a coordinate of two-dimensional space;
or,

selecting $f'(x)$ making $\dfrac{\Sigma_l\|\nabla_l(f'(x)-f_r(x))\|_1}{\Sigma_l(\|\nabla_l f'(x)\|_1+\|\nabla_l f_r(x)\|_1)}$ minimum as a registered image, wherein $\|\nabla_l f'(x)\|_1 = \Sigma_{x\in\Omega}\nabla_l f'(x)$, $\|\nabla_l f_r(x)\|_1 = \Sigma_{x\in\Omega}\nabla_l f_r(x)$; and

fusing the registered image with the reference image.

8. A multispectral multi-sensor synergistic processing apparatus, comprising a memory and a processor, and the memory storing a program, wherein the program, when being read and executed by the processor, implements the multispectral multi-sensor synergistic processing method according to any one of claims 1 to 7.

9. The apparatus according to claim 8, further comprising a lens, a beam splitter prism and a plurality of sensors, wherein,

the lens is configured to receive external light and transmit the external light to the beam splitter prism;
the beam splitter prism is configured to split incident light to obtain a plurality of monochromatic lights, and the plurality of monochromatic lights are incident on the plurality of sensors respectively, wherein each of the plurality of monochromatic lights is incident on one sensor; and
the sensor is configured to convert the incident light into an electrical signal and output the electrical signal to the processor.

10. A computer-readable storage medium storing one or more programs, wherein the one or more programs is executable by one or more processors to implement the multispectral multi-sensor synergistic processing method according to any one of claims 1 to 7.

**FIG. 1**

201

Acquire images of multiple channels, where an image of each channel is a monochrome image, and colors of the images of different channels are different

202

Perform detection, identification and tracking of a target according to the monochrome images, generate a tracking box for the target and store information of the tracking box

203

Register and fuse the images of the multiple channels to generate a fused image, and overlay stored information of the tracking box onto the fused image

**FIG. 2**

(a) RGB     (b) 560 nm     (c) 700 nm     (d) Joint histogram

**FIG. 3**

**FIG. 4**

| | |
|---|---|
| **INTERNATIONAL SEARCH REPORT** | International application No. |
| | **PCT/CN2022/139450** |

**A.    CLASSIFICATION OF SUBJECT MATTER**

G06T7/292(2017.01)i

According to International Patent Classification (IPC) or to both national classification and IPC

**B.    FIELDS SEARCHED**

Minimum documentation searched (classification system followed by classification symbols)

G06T

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI; IEEE: 多光谱, 多通道, 单通道, 单光谱, 单色, 图像, 目标, 检测, 识别, 跟踪, 配准, 融合, 梯度, multi-spectral, multi-channels, single channel, single spectral, single color, image, target, detect, recognition, track, registration, fusion, gradient

**C.    DOCUMENTS CONSIDERED TO BE RELEVANT**

| Category* | Citation of document, with indication, where appropriate, of the relevant passages | Relevant to claim No. |
|---|---|---|
| PX | CN 114782502 A (ZHEJIANG UNIVIEW TECHNOLOGIES CO., LTD.) 22 July 2022 (2022-07-22)<br>claims 1-10, and description, paragraphs 28-65 | 1-10 |
| X | CN 109740563 A (HUNAN ZHONGZHI JUNYING TECHNOLOGY CO., LTD.) 10 May 2019 (2019-05-10)<br>description, paragraphs [0037]-[0067] | 1-3, 8-10 |
| Y | CN 109740563 A (HUNAN ZHONGZHI JUNYING TECHNOLOGY CO., LTD.) 10 May 2019 (2019-05-10)<br>description, paragraphs [0037]-[0067] | 7-10 |
| X | CN 114419741 A (SHENZHEN YIXIN VISION TECHNOLOGY CO., LTD. et al.) 29 April 2022 (2022-04-29)<br>description, paragraphs 16-112 | 1-3, 8-10 |
| Y | CN 114419741 A (SHENZHEN YIXIN VISION TECHNOLOGY CO., LTD. et al.) 29 April 2022 (2022-04-29)<br>description, paragraphs 16-112 | 7-10 |

☑ Further documents are listed in the continuation of Box C.          ☑ See patent family annex.

| | |
|---|---|
| *    Special categories of cited documents:<br>"A"    document defining the general state of the art which is not considered to be of particular relevance<br>"D"    document cited by the applicant in the international application<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |
| Date of the actual completion of the international search<br><br>**13 February 2023** | Date of mailing of the international search report<br><br>**22 February 2023** |
| Name and mailing address of the ISA/CN<br><br>**China National Intellectual Property Administration (ISA/CN)**<br>**China No. 6, Xitucheng Road, Jimenqiao, Haidian District, Beijing 100088** | Authorized officer |
| Facsimile No. **(86-10)62019451** | Telephone No. |

Form PCT/ISA/210 (second sheet) (July 2022)

| INTERNATIONAL SEARCH REPORT | International application No. |
|---|---|
| | **PCT/CN2022/139450** |

**C. DOCUMENTS CONSIDERED TO BE RELEVANT**

| Category* | Citation of document, with indication, where appropriate, of the relevant passages | Relevant to claim No. |
|---|---|---|
| A | CN 103500341 A (ANHUI POLYTECHNIC UNIVERSITY) 08 January 2014 (2014-01-08) entire document | 1-10 |
| A | US 2020143137 A1 (ALIBABA GROUP HOLDING LIMITED) 07 May 2020 (2020-05-07) entire document | 1-10 |
| Y | 陈书界 (CHEN, Shujie). "多光谱图像配准与去模糊方法研究 (Investigation of Registration and Deblurring Methods for Multispectral Images)" 中国博士学位论文全文数据库信息科技辑 (Information Science & Technology, China Doctoral Dissertations Full-Text Database), No. 01, 15 January 2019 (2019-01-15), ISSN: 1674-022X, pages 13-23, sections 2.2-2.3 | 7-10 |

Form PCT/ISA/210 (second sheet) (July 2022)

**INTERNATIONAL SEARCH REPORT**
Information on patent family members

International application No.

**PCT/CN2022/139450**

| Patent document cited in search report | | | Publication date (day/month/year) | Patent family member(s) | | | Publication date (day/month/year) |
|---|---|---|---|---|---|---|---|
| CN | 114782502 | A | 22 July 2022 | CN | 114782502 | B | 04 November 2022 |
| CN | 109740563 | A | 10 May 2019 | CN | 109740563 | B | 12 February 2021 |
| CN | 114419741 | A | 29 April 2022 | CN | 114419741 | B | 19 July 2022 |
| CN | 103500341 | A | 08 January 2014 | None | | | |
| US | 2020143137 | A1 | 07 May 2020 | US | 10956704 | B2 | 23 March 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210676732